(19) Europäisches Patentamt European Patent Office Office européen des brevets

(11) **EP 1 467 512 B1**

(12) **EUROPEAN PATENT SPECIFICATION**

(45) Date of publication and mention of the grant of the patent:
**23.07.2008 Bulletin 2008/30**

(51) Int Cl.:
*H04L 9/00* (2006.01)

(21) Application number: **03425219.7**

(22) Date of filing: **07.04.2003**

(54) **Encryption process employing chaotic maps and digital signature process**

Verschlüsselungsverfahren unter Verwendung von chaotischen Abbildungen und digitale Unterschriftsverfahren

Procédé de chiffrage utilisant un mappage chaotique et procédé de signature électronique

(84) Designated Contracting States:
**DE FR GB IT**

(43) Date of publication of application:
**13.10.2004 Bulletin 2004/42**

(73) Proprietor: **STMicroelectronics S.r.l.**
**20041 Agrate Brianza (Milano) (IT)**

(72) Inventors:
• **Kocarev, Ljupco**
  **San Diego CA 92122 (US)**
• **Tasev, Zarko**
  **San Diego CA 92122 (US)**
• **Amato, Paolo**
  **20051 Limbiate (IT)**
• **Rizzotto, Gianguido**
  **23862 Civate (IT)**

(74) Representative: **Pellegri, Alberto et al**
  **Società Italiana Brevetti S.p.A.**
  **Via Avegno, 6**
  **21100 Varese (IT)**

(56) References cited:
**WO-A-98/36523**

• **SHAMIR A: "On the power of commutativity in cryptography" AUTOMATA, LANGUAGES AND PROGRAMMING. INTERNATIONAL COLLOQUIUM PROCEEDINGS, , 14 July 1980 (1980-07-14), pages 582-595, XP002116401**
• **KOCAREV L ET AL: "From chaotic maps to encryption schemes" ISCAS '98. PROCEEDINGS OF THE 1998 IEEE INTERNATIONAL SYMPOSIUM ON CIRCUITS AND SYSTEMS, MONTEREY, CA, USA 31 MAY-3 JUNE 1998, NEW YORK, NY, USA,IEEE, US, 31 May 1998 (1998-05-31), pages 514-517, XP010289462 ISBN: 0-7803-4455-3**

**Description**

FIELD OF THE INVENTION

The present invention relates to data encryption and in particular to an encryption process that uses chaotic maps and to related digital signature processes.

BACKGROUND OF THE INVENTION

Over the past decade, there has been a great interest in studying the behavior of chaotic systems. Notably, they depend on initial conditions, have a random behavior and a continuous broadband power spectrum.

Chaos has potential applications in important functional areas of a digital communication system, namely: compression, encryption and modulation. The possibility of self-synchronizing chaotic oscillations [1] has sparkled a wealth of works on the application of chaos in cryptography. Mentioning all significative papers on chaos and cryptography would be prohibitively long, therefore, we draw the attention of the reader to a few recent works [2].

Several applications of chaos in cryptography have been recently proposed: the works presented in [3, 4, 5] ushered in the era *of scientific chaos-based cryptography,* which has triggered research on chaos-based data protection for real-world applications.

In [3] a method for generating truly random numbers and a generator implementing the method in CMOS technology are disclosed.

Random numbers are very important in every cryptographic and data protection application.

Block encryption algorithms based on chaotic maps are proposed in [4]. Lower bounds of a number of active S-boxes as well as upper bounds for differential and linear probabilities have been analytically derived in the proposed algorithms, and resistance of these algorithms to differential and linear attacks has been proved.

A set of pseudo-random-bit generators, that do not use modular multiplications and the security of which does not rely on solvability of a problem of the theory of numbers is presented in [5]. By contrast, their security relies on the fact that the inverse of the function used in the algorithm has a multitude of branches. The generators exclusively use binary operations and may thus be efficiently implemented by a computer program.

The article *Communication Theory of Secrecy Systems* [7] by C. E. Shannon, published in 1949, ushered in the era of *scientific secret-key cryptography.* However, Shannon's article did not lead to an explosion of researches on cryptography comparable to that triggered by his earlier articles published in 1948 in information theory [8]. The real explosion of works on cryptography came with an article by W. Diffie and M. E. Hellman [9]. Diffie and Hellman showed for the first time that a secret communication was possible without any transfer of a secret key between sender and recipient, thus starting the era of *public-key cryptography.* Moreover, they suggested that computational complexity theory could be used for future research in cryptography.

Substantially, an encryption process is a process for transmitting data in a mode that ensures that the data remain private, by converting a message, referred to as a "plain-text", into an encrypted format, referred to as a "cipher-text". A sender encrypts the message by using an encryption key, while the recipient of the message recovers the plain-text from the received cipher-text by using a decryption key.

Public-key encryption algorithms, also called asymmetric algorithms, are designed so that

(i) the encryption key is different from the decryption key,
(ii) the encryption key can be made public, and
(iii) the decryption key cannot, at least in a reasonable amount of time, be calculated from the encryption key.

There are many public-key algorithms: only few of them are both secure and practical, and only three of them work well for both encryption and digital signature: RSA, ElGamal, and Rabin [6].

In a public-key encryption system [6] each entity $A$ has a *public key "e"* and a corresponding *private key "d".* In secure systems, the task of calculating the private key "$d$" from the public key "$e$" is practically impossible.

The public key defines an encryption transformation $E_e$, while the private key defines the associated decryption transformation $D_d$.

A sender $B$ wishing to send a message $M$ to a recipient $A$ must obtain an authentic copy of the recipient public key "$e$", use the encryption transformation to obtain the cypher-text $c = E_e(M)$, and transmit the encrypted message "$c$" to the recipient $A$. The recipient $A$ decrypts the cipher-text "$c$" using the decryption transformation and obtains the plain-text $M = D_d(c)$.

Since 1976, numerous public-key algorithms have been proposed. Three most widely used public-key encryption processes are: RSA, Rabin and ElGamal.

The security of the RSA process is based on the intractability of the integer factorization problem.

In the Rabin public-key encryption process, the problem faced by a passive adversary is computationally equivalent to factorizing a number.

The security of the ElGamal public-key encryption process is based on the intractability of the discrete-logarithm problem.

Public-key encryption processes are much slower than symmetric-key encryption algorithms. For this reason, public-key encryption is most commonly used in practice for encrypting short data and/or for transporting encryption keys, subsequently used for data encryption by symmetric-key algorithms.

The article by L. Kocarev et al. "From chaotic maps to encryption schemes", ISCAS '98, Proceedings of the 1998 IEEE International Symposium on circuits and systems, Monterey, CA, USA 31 May-June 1998, New York, NY, USA, IEEE, US, 31 May 1998, pages 514-517, XP010289462 ISBN: 0-7803-4455-3 discloses an encryption algorithm derived from a chaotic map.

The article by A. Shamir "On the power of commutativity in cryptography", Automata Languages and Programming, International Colloquium Proceedings, 14 July 1980, pages 582-595, XP002116401 provides a survey on the role of commutativity in cryptography.

OBJECT AND SUMMARY OF THE INVENTION

It has been found and is the object of the present invention an encryption process, with or without public-key, that may be implemented on common computers and that compared to the known public-key encryption processes can be executed in a reduced amount of time.

The encryption process of the present invention

(i) is both secure and practical,
(ii) does not require modular arithmetic, and therefore is very fast, and
(iii) may be used for realizing a digital signature process.

The gist of the invention consists in encrypting/decrypting data by using permutable chaotic maps $f\left(p\left(f^{-1}(.)\right)\right),$ which are composite functions of a first function $f(.)$, the inverse function of the first function $f^1(.)$ and a second function $p(.)$. These chaotic maps may be used for realizing encryption processes that may contemplate a public key or not.

In general, each entity generates his own secret key of the process by using the second function $p(.)$, while the first function is pre-established. For example, the function $f(.)$ and the inverse thereof $f^1(.)$ may be implemented in an encrypting/decrypting device and it is necessary to specify only the second function $p(.)$.

The first and second functions are defined on the same phase space, that is they are defined in the same domain and their images are in this domain.

More precisely, object of this invention is an encryption process that comprises the following steps:

- preliminarily choosing at least a secret key and a set of permutable functions defined on a certain phase space for encrypting/decrypting messages,
- choosing a code for encoding messages to be sent in the form of a number belonging to the phase space,

and wherein the set of permutable functions is composed of chaotic maps generated by a composite function of a first function, the inverse function of the first function and a second function,

- the secret key is defined by using the second function.

Preferably the chaotic maps, are Chebyshev maps the degree of which is a private key, or even chaotic maps, the second function of which is a trapdoor function (see [6]).

Another object of this invention is a digital signature process for a public-key encryption process defined above that uses chaotic maps, the second function of which is defined by a parameter (e.g. Chebyshev maps), and for a public-key encryption process defined above that uses trapdoor functions.

The processes according to this invention may be easily implemented by a software computer program.

The invention is more precisely defined in the annexed claims.

BRIEF DESCRIPTION OF THE DRAWINGS

The different aspects and advantages will appear even more evident through a detailed description referring to the attached drawings, wherein:

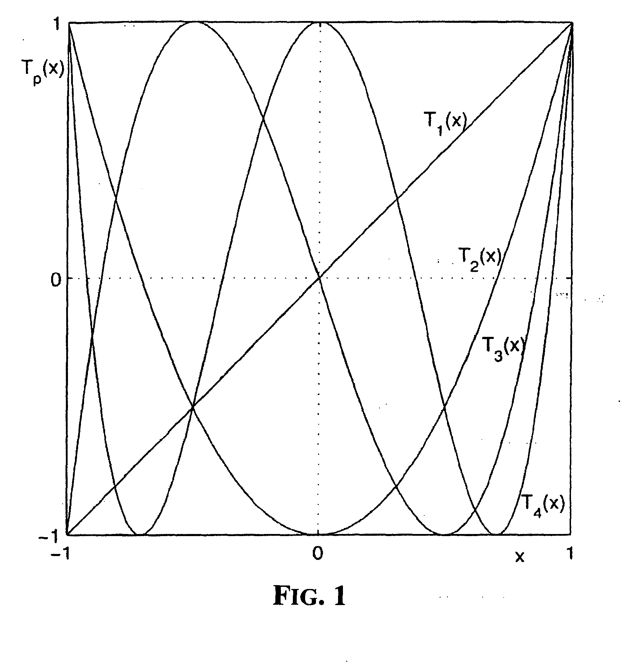

   **Figure 1** is a diagram of four Chebyshev polynomials;

DESCRIPTION OF SEVERAL EMBODIMENTS OF THE INVENTION

The encryption process of this invention is based on the use of chaotic maps, that are composite functions $f\left(p\left(f^{-1}(.)\right)\right)$ generated by composing a first function $f(.)$, a second function $p(.)$ and the inverse of the first function $f^{-1}(.)$. The functions $f(.)$ and $p(.)$ are defined on a phase space $PS$, that is they are defined on a certain domain and their images are in the same domain, that is

$$f(.):PS \rightarrow PS; \qquad p(.):PS \rightarrow PS.$$

The phase space $PS$ can be any domain and must be the same for functions $f(.)$ and $p(.)$.

The gist of this invention consists in encrypting/decrypting messages by using permutable chaotic maps sharing the same first function $f(.)$, defining a secret key by using the second function $p(.)$. Chaotic maps may be used both in public-key encryption processes and in processes that contemplate only a private key.

A secret key encryption process of the invention is implemented by using two permutable chaotic maps first $f\left(p_S\left(f^{-1}(.)\right)\right)$ and second $f\left(p_R\left(f^{-1}(.)\right)\right)$, which means that $p_S\left(p_R(.)\right) = p_R\left(p_S(.)\right)$, the second functions of which $p_S(.)$ and $p_R(.)$ are invertible in the phase space.

A sender encrypts a message $M$, representing it in numerical form, to be sent to a recipient, by calculating the image thereof $f\left(p_S\left(f^{-1}(M)\right)\right)$ through the sender chaotic map. On his turn the recipient encrypts the encrypted message using his own chaotic map, sending back to the sender a twice encrypted message

$$f\left(p_R\left(p_S\left(f^{-1}(M)\right)\right)\right) = f\left(p_S\left(p_R\left(f^{-1}(M)\right)\right)\right).$$

The sender decrypts the twice encrypted message, sending to the recipient the quantity $f\left(p_R\left(f^{-1}(M)\right)\right)$ because

$$f\left(p_S^{-1}\left(f^{-1}\left(f\left(p_R\left(p_S\left(f^{-1}(M)\right)\right)\right)\right)\right)\right) = f\left(p_S^{-1}\left(p_S\left(p_R\left(f^{-1}(M)\right)\right)\right)\right) = f\left(p_R\left(f^{-1}(M)\right)\right).$$

Finally, the recipient recovers the message $M$ by decrypting the quantity $f\left(p_R\left(f^{-1}(M)\right)\right)$.

Chaotic maps may be used also in public key encryption processes and in related digital signature processes.

A first public-key encryption process of this invention that uses chaotic maps is based on the so-called trapdoor functions (see [6]), that are functions the inverse of which is extremely difficult to compute.

According to this encryption process, a recipient of a message chooses a second function $p_R(.)$ as public key, the inverse of which $p_R^{-1}$ being hardly computable constitutes his private key. A sender of a message encrypts an encoded message $M$ by calculating the image thereof through the chaotic map using the public key of the recipient of the message $M$; finally the recipient decrypts the encrypted message by using his private key $p_R^{-1}(.)$.

A digital signature for a message encrypted according to the above process is generated as follows.

A sender encrypts a digital signature $SIG$, which is substantially a number representing a pre-established string or even a message M to be sent, by calculating the image thereof through the chaotic map $f\!\left(p_S^{-1}\!\left(f^{-1}(.)\right)\right)$ using his own private key $p_S^{-1}(.)$, and encrypts a message *M* together with the encrypted digital signature appended thereto by calculating the image of the combination of the message and the encrypted digital signature through the chaotic map $f\!\left(p_R\!\left(f^{-1}(.)\right)\right)$ using the recipient public-key $p_R$ (.).

A recipient decrypts the received encrypted message by calculating the image thereof through the chaotic map $f\!\left(p_R^{-1}\!\left(f^{-1}(.)\right)\right)$ using his own private key $p_R^{-1}(.)$, (.), and obtains the digital signature *SIG* decrypting the just decrypted message by calculating the image thereof through the chaotic map $f\!\left(p_S\!\left(f^{-1}(.)\right)\right)$ using the sender public key $p_S(.)$.

For sake of simplicity, a preferred embodiment of an encryption process of this invention is illustrated in the ensuing description by referring to Chebyshev polynomial maps, which are a particular kind of chaotic maps, though what will be said holds, *mutatis mutandis,* for a chaotic map of any other kind.

A Chebyshev polynomial map $T_p$ (.):[-1,1] $\to$ [-1,1] of degree *p* is

$$T_p(x) = \cos\!\left(p \cdot \cos^{-1}(x)\right) \tag{1}$$

where *p* = 2, 3, ... This map has an unique absolutely continuous invariant measure:

$$\mu(x)dx = \frac{dx}{\pi\sqrt{1 - x^2}}$$

with positive Lyapunov exponent $\lambda = \ln p$. For *p* = 2, Eq. (1) becomes the well-known logistic map [14]. One of the most remarkable properties of the Chebyshev polynomials is the so called *semi-group* property [10]:

$$T_r(T_s(x)) = T_{rs}(x) \tag{2}$$

An immediate consequence of this property is that Chebyshev polynomials are permutable, i.e.

$$T_r(T_s(x)) = T_s(T_r(x)) \tag{3}$$

Let $x_n$ be the trajectory of the Chebyshev map $x_{n+1} = T_p (x_n)$ for *n* = 0, 1, 2 ... in the phase space [-1,1] with initial condition $x_0$. Therefore, for Eq. (2)

$$x_n = T_p\!\left(T_p\!\left(...T_p(x_0)\right)\right) = T_{p^n}(x_0).$$

Several low order Chebyshev polynomials are:

$$T_2(x) = 2x^2 - 1$$

$$T_3(x) = 4x^3 - 3x^2$$

$$T_4(x) = 8x^4 - 8x^2 + 1$$

and are graphically shown in Figure 1.

A second public-key encryption process of this invention is in some measure similar to the ElGamal public-key process, but differently from it uses chaotic maps. A preferred embodiment thereof is now presented again using Chebyshev maps for an example, but that may be easily generalized for employing any other chaotic map.

A recipient $A$ of a message $M$ generates an integer "$r$" (preferably a large integer), selects a random number $x \in$ [-1, 1] and computes $T_r(x)$. The recipient public key is $(x, T_r(x))$, while his private key is the integer "$r$". If the integer "$r$" is relatively large, it is practically impossible to obtain the private key from the public key.

A sender $B$ encrypts a message $M$ to be sent to the recipient $A$ by performing the following steps:

- obtaining the recipient authentic public key $(x, T_r(x))$;
- encoding the message into a number $M \in$ [-1,1];
- generating an integer "$s$" (preferably a relatively large integer, as explained hereinbefore);
- calculating $T_s(x)$ and $T_{sr}(x) = T_s(T_r(x))$;
- calculating $X = q_{T_s(T_r(x))}(M)$, wherein the function $q_{par}(.)$ is a pre-established invertible parametric function defined almost everywhere on the phase space of the chaotic map, which in this case is the domain [-1,1];
- sending the cipher-text $c = (T_s(x), X)$ to the recipient $A$.

The recipient $A$ recovers the plain-text $M$ from the cipher text "$c$" by

- using his private key "$r$" to calculate $T_{rs}(x) = T_r(T_s(x))$, which is equal to $T_{sr}(x)$;

- calculating $M = q M = q_{T_{rs}(x)}^{-1}(X)$.

The function $q_{par}(.)$ must be defined almost everywhere on [-1,1], that is it must have at most isolated singular points for $par \in$ [-1,1]. This requisite is necessary because if this function has at most isolated points of discontinuity, the probability that the value $X$ does not exist is theoretically null.

The parametric function $q_{par}(.)$ may be defined as the product between its argument by the parameter "$par$". It may be defined also as the ratio between the argument of the function by the parameter "$par$", or the sum or even the arithmetic mean of them. Let us suppose that this function is

$$q_{par}(M.) = M \cdot par .$$

There are two problems related to the software implementation of the algorithm. The first problem is that, encryption, decryption, signing, and verifying signatures all involve multiplications by large numbers.

This operation is preferably performed as follows. The number "$s$" is first factorized:

$$s = \underbrace{s_1 \cdots s_1}_{k_1} \underbrace{s_2 \cdots s_2}_{k_2} \cdots \underbrace{s_i \cdots s_i}_{k_i} = s_1^{k_1} s_2^{k_2} \cdots s_i^{k_i} \qquad (4)$$

Then $T_s(y)$ is calculated by iterating $k_1 + k_2 \ldots + k_i$ times the Chebyshev map according to the following formula

$$T_s(y) = \underbrace{T_{s_1}(\cdots T_{s_1}}_{k_1} \cdots \underbrace{T_{s_i} \cdots T_{s_i}}_{k_i}(y))) \qquad (5)$$

The fact that Chebyshev polynomials satisfy Eq. (5) makes them particularly suited for implementing the encryption process of the invention.

The second problem is related to the fact that the message *M* is recovered by using Eq. (3). However, due to the chaotic nature of the Chebyshev map, Eq. (3) holds only for $s < s_0$ and $r < r_0$, where $s_0$ and $r_0$ are numbers which depend on the arithmetic precision used for implementing the algorithm. The following Table 1 shows the values of $s_0$ and $r_0$ using different precision arithmetic and imposing that a 128 bits message be decrypted

**TAB.1**

| N-bit precision | $r_0, s_0$ |
|---|---|
| N=256 | $\sim 2^{70}$ |
| N=512 | $\sim 2^{190}$ |
| N=1024 | $\sim 2^{450}$ |
| N=2048 | $\sim 2^{9700}$ |

Preferably the present encryption process is implemented by a software that uses the GNU multiple precision arithmetic library [11]. GNU MP is a portable library written in C language for arbitrary precision arithmetic on integers, rational functions, and floating-point numbers. The library GNU MP does not have a routine for computing cosine function with arbitrary precision. For this reason the value of $T_s(x)$ is calculated by using the following recursive relation between Chebyshev polynomials:

$$T_{p+1}(x) = 2x \cdot T_p(x) - T_{p-1}(x) \qquad (6)$$

with $T_0(x)=1$ and $T_1(x)=x$.

Let's show a numerical example, using a 2048-bit precision arithmetic. The private and public keys of the entity *A* are

$$r = 2^{64} \cdot 3^{36} \cdot 113^{21} \cdot 23^{81} \cdot 59^{48} \cong 2^{910}$$

$$(x, T_r(x)) = (0.25749480, -0.0176128306\ldots)$$

respectively.

The private key "*s*" of the entity *B* may be

$$s = 3^{54} \cdot 7^{22} \cdot 41^{55} \cdot 133^{19} \cdot 31^{70} \cong 2^{920}$$

and a sample message to be sent

$$M = 0.\underbrace{1\cdots1}_{10}\underbrace{4\cdots4}_{10}$$

The sender *B* computes

$$T_s(x) = 0.9921943793\cdots$$

$$T_s(T_r(x)) = 0.6571609510\cdots$$

$$X = -0.7301788346\cdots$$

and sends the cipher-text $c = (T_r(x),X)$ to the recipient $A$, which on his turn successfully recovers the plain-text message $M$.

The encryption process of this invention is more secure than the ElGamal algorithm. In fact, for the basic ElGamal encryption scheme the entity $A$ should perform the following operations:

(i) generating a large prime $n$ and a generator $x$ of the multiplicative group $Z_n^{\bullet}$ of the integers modulo $n$ (which is the set of integers modulo $n$ whose greatest common divider with $n$ is 1), and
(ii) selecting a random number $p$, $1 \leq p \leq n - 2$ and computing $W = x^p$ mod $n$. $A$'s public key is *(n, x, W),* while $A$'s private key is *p.*

The security of the ElGamal encryption process is based on the fact that the discrete logarithm problem in the multiplicative group $Z_n^{\bullet}$ cannot be solved (although such an equivalence has not been proven yet): given *n, x,* and $W$ there is only one integer $p$ which, however, is hard to compute. Given the latest progress on the discrete logarithm problem in $Z_n^{\bullet}$, a 1024-bit modulus $n$ provides only marginal security against concerted attack.

The security of the above described second public-key encryption process of this invention is based on the fact that, if Chebyshev polynomials are used, the chaotic map $T_p(.)$ is a polynomial of order $p,$ not just a power $x^p$. Given only one pair $(x, T_p(x))$, computing the order $p$ of the polynomial is much harder than computing the integer exponent $p$ of a power. Thus, recovering the private key "$s$" from the values $x$ and $T_s(x)$ is possible only by computing $T_p(x)$ for all $p \geq 2$ and testing whether $T_p(x) = T_s(x)$. However, this takes too long: if the private key "$s$" is large enough (for a 2048-bit precision this number may be even about $2^{970}$), computing $T_p(x)$ for all $p = 2, ..., s$ would exhaust the capacity of all existing computers for more than the expected life of the universe.

Advantages and peculiarities of the preferred embodiment of an encryption process of this invention are mentioned hereinbelow.

1. The main advantage over existing public-key encryption algorithms is that the private key can be any large integer: there is no need to look for large prime numbers. As can be seen from Eq. (4), generating a large number "$s$" and using it with Chebyshev polynomials as a private key is easy.

2. It is reasonably secure even for relatively small numbers. The basic ElGamal encryption process, for $n \cong 2^{500}$, does not provide a reasonable security level. By contrast, this process of the invention for $s \cong 2^{500}$ is secure for many years to come.

3. The algorithm is reasonably fast: on an Intel Pentium 550MHz processor, the present algorithm encrypts and decrypts 128-bit messages using 2048 bit precision arithmetic in less than 1s. The total number of multiplications and additions required by the encryption process, computing $T_s(x)$ by equations (5) and (6), is $d = 2\left( \sum_{j=1}^{j=i} s_j k_j \right)$.

It is possible to optimize and/or speed up the algorithm by minimizing *"d"* while keeping "$s$" large or by using a procedure for computing cosine functions with arbitrary precision.

4. An advantage of using Chebyshev maps, is that $x$ and $T_s(x)$ (or $T_s(x)$ and $X$) are independent random variables.

5. It is possible to realize a relative digital signature process.

6. The present encryption process, as well as the basic ElGamal algorithm, uses random numbers.

7. A disadvantage of the algorithm of this invention, which comes from the chaotic property of the Chebyshev map, is that the length of the plain-text message should always be smaller than the precision used in the algorithm.

8. Another disadvantage of the encryption process that derives from the ElGamal-type structure of the algorithm, is that the cipher-text "$c$" is in the form $c = (T_s(x), X)$ so that the total length of the cipher-text, for 2048-bit arithmetic precision, is 4096 bits.

9. Let us suppose that the message $M$ is a plain English text written in the following form $M = \pm 0.a_1a_2 \ldots a_k$, where $a_i \in \{0,1,\ldots 9\}$. Given that $T_r(x) \in [-1, 1]$, an adversary could use this strategy to break the preferred embodiment of the encryption process in which $X = M \cdot T_{rs}(x)$: by dividing the interval $[-1, 1]$ in a finite number of sub-intervals, choosing a number $y$ from each sub-interval, computing $M = X/y$ and guessing the meaning of a first digit $a_i$ of the message $M$. In order to jeopardize this strategy, the sender $B$ should choose the first 10 digits $a_i$ (that is for $i$ = 1, 2,..., 10) in a random mode (which have not to be known to the recipient $A$). The hypothetic attack would not work if all $a_i$ are random numbers, as it happens when the message $M$ is a key for a symmetric-key encryption process.

In the just described algorithm though $X = M \cdot T_{rs}(x)$ works with Chebyshev polynomials, it can be generalized to work with any chaotic map $T_r(.) = f\left(r \cdot f^{-1}(.)\right)$, the second function of which is a linear function.

We shall now address the following question: is there any other chaotic map with the semi-group property $T_r$ $(T_s(.)) = T_{rs}(.)$?

Let us first consider polynomials. Two polynomials, $P(.)$ and $Q(.)$, are permutable if $P(Q(x)) = Q(P(x))$ for all $x$. Let us write $P \circ Q$ to indicate the composite function $P(Q(.))$.

A set of polynomials of positive degree and such that any two polynomials are permutable, is called a *chain*. The Chebyshev polynomials $T_1(x)$, $T_2(x)$, ... form a chain. The powers $\pi_j(x) = x^j$, $j$ = 1, 2.... form a chain as well. Suppose that $\lambda(x) = ax + b$, $a \neq 0$ and $\lambda^{-1}(x) = (x-b)/a$. If $P(.)$ and $Q(.)$ are permutable, also $\lambda^{-1} \circ P \circ \lambda$ and $\lambda^{-1} \circ Q \circ \lambda$ are permutable. Let us say that $P(.)$ and $\lambda^{-1} \circ P \circ \lambda$ are *similar.*

The answer to the above question for polynomials is given by the following theorem [12]: If $P(.)$ and $Q(.)$ are permutable, either both are iterations of the same polynomial or both are similar, with respect to the same function $\lambda$, to either Chebyshev polynomials or powers. Thus, the sequences $\{T_j\}$ and $\{\pi_j\}$ are the only chains of polynomials, up to similarities.

Powers have been used in cryptography for a long time. For example, powers are used for encryption and decryption in the ElGamal public-key process. In this case the set of functions is defined as $\pi_p = x^p \bmod n$, where $n$ is a prime number, $x$ is a generator of the multiplicative group $Z_n^{\bullet}$, and $p$ is an integer such that $1 \leq p \leq n$ - 2. Any two

functions belonging to $\pi_p$, $\forall p = 1, 2 \ldots, n$ - 2, are permutable.

Whether the chain $\{\pi_j\} = x^j$, $j$ = 1,2,..., $x \in R$, can be used in a public-key encryption process is still an open question. If we consider only the functions $x^j \bmod 1$, defined on the phase space [0, 1], which form a chain, then the dynamic is trivial: for $j \geq 2$ a trajectory of the map approaches zero. However, the following class of func-

tions $T_p(x) = \left((x+1)^p - 1\right) \bmod 1$, defined on the phase space [0, 1], which are chaotic, can be used in public-key encryption process. Another example of chaotic maps that can be used in encryption processes is

$$T_p(x) = \cos\left[\left(2 + \cos^{-1}(x)\right)^p - 2\right]$$

defined on [-1, 1].

At present time only one class of rational maps with semi-group property is known: the so called *Jacobian elliptic Chebyshev rational maps* introduced recently by Kohda and Fujisaki [13]. This embodiment of the second public-key encryption process of this invention works with these maps as well.

The ElGamal signature algorithm is a randomized signature process. It generates digital signatures appended on binary messages of arbitrary length, and requires a hash function $h:\{0,1\}^* \to Z_p$ where $p$ is a large prime number and $Z_p$ is the set of integers modulo $p$. The DSA (Digital Signature Algorithm) is a variant of the ElGamal signature algorithm. For an introduction to hash functions, see [6].

Yet another object of this present invention is a digital signature process for the above described second public-key encryption process, that contemplates the use of chaotic maps, the second function of which may be fully identified by a parameter, such as the Chebyshev polynomial maps.

Substantially, a sender performs the following steps:

-    generating a public key ($x$, $T_a(x)$), wherein a first integer number *"a"* is the parameter of the chaotic map;
-    generating a second integer number "$k$" and calculating a second image $T_k(x)$ of the random number $x$ through the

chaotic map $T_k(.)$, the parameter of which is the second integer number $k$;
- generating a verification number $h$;
- choosing a first test function $V_1(.)$, a second test function $V_2(.)$ and a third test function $H(.)$, which in general depend on four independent variables, such that

$$V_1\big(T_a(x), T_k(x), H(h, T_{k'}(x), k, a), x\big) \equiv V_2\big(h, T_k(x), H(h, T_k(x), k, a), x\big);$$

- generating a second verification number s using the third test function $H(.)$ according to the following formula

$$s = H\big(h, T_k(x), k, a\big);$$

- sending the pair $(T_k(x), s)$ as signature of a message $M$.

A receiver performs the following steps:

- obtaining the authentic sender public key $(x, T_a(x))$;
- calculating a first test value $v_1$ using the first test function $V_1(.)$ according to the following formula

$$v_1 = V_1\big(T_a(x), T_k(x), s, x\big);$$

- calculating a second test value $v_2$ using the second test function $V_2(.)$ and the verification number $h$ according to the following formula

$$v_2 = V_2\big(h, T_k(x), s, x\big);$$

- verifying whether said test values first $v_1$ and second $v_2$ are identical.

Obviously, the test functions must be designed so that only the owner of the private key "$a$" is capable of generating a number "$s$" for which $v_1 = v_2$.

As it may be noticed, this digital signature process does not need any hash function, because the verification number "$h$" may be any pre-established number. Of course, it is possible to use hash functions in this digital signature process by calculating the verification number as the image through a hash $h(.)$ function of the message $M$ to be sent.

Two possible embodiments of this digital signature process for the case in which Chebyshev maps are used, are illustrated.

According to a first embodiment, it is necessary to define a first $g_1(.)$ and a second $g_2(.)$ auxiliary function such that

$$g_1\big(h, T_k(x)\big) \cdot k = g_2(s) \cdot a \; ; \qquad\qquad (7)$$

the first test value $v_1$ being the image of said random number $x$ through the chaotic map according to the following formula

$$v_1 = T_{g_2(s)}\big(T_a(x)\big);$$

the second test value $v_2$ being the image of the random number $x$ through the chaotic map according to the following formula

$$v_2 = T_{g_1(h,T_k(x))}\big(T_k(x)\big).$$

Preferably, the first auxiliary function returns the value of the verification number $h$

$$g_1\big(h,T_k(x)\big) = h$$

the second auxiliary function $g_2(.)$ is the identity function

$$g_2(s) = s$$

and so, considering Eq. (7),

$$s = \frac{h \cdot k}{a}.$$

According to another embodiment of the digital signature process of this invention, the second verification number $s$ is the ratio between the difference between the verification number $h$ and the product between the integer $a$ by the value $T_k(x)$, and the second integer number $k$,

$$\frac{h - a \cdot T_k(x)}{k}$$

while the second test value $v_2$ is the image of the random number $x$ through the Chebyshev map $\cos\big(h \cdot \cos^{-1}(.)\big)$ the order of which is the verification number $h$.

The receiver carries out the following operations:

- calculating an auxiliary value $T_{T_k(x)}(T_a(x)) = T_{T_k(x)a}(x)$;

- calculating a second auxiliary value $T_s(T_k(x)) = T_{sk}(x)$;

- calculating the first test value $v_1$

$$v_1 = T_{T_k(x)a+ks}(x)$$

by combining the auxiliary values $T_{Tk(x)a}(x)$ and $T_{sk}(x)$ according to the following equation

$$v_1 = T_{T_k(x)a+ks}(x) = T_{T_k(x)a}(x) \cdot T_{ks}(x) - \sqrt{\big(1 - T_{T_k(x)a}^2(x)\big) \cdot \big(1 - T_{ks}^2(x)\big)} \qquad (8)$$

*Proof*: given that

$$T_{T_k(x)a+ks}(x) = \cos\left[\left(T_k(x)\cdot a + ks\right)\cdot \cos^{-1}(x)\right]$$

applying the following trigonometric identity

$$\cos(y+z) = \cos y \cdot \cos z - \sin y \cdot \sin z$$

it is possible to state that

$$\cos\left[\left(T_k(x)\cdot a + ks\right)\cdot \cos^{-1}(x)\right] = \cos\left[T_k(x)\cdot a \cdot \cos^{-1}(x)\right]\cdot \cos\left[ks\cdot \cos^{-1}(x)\right]+$$
$$-\sin\left[T_k(x)\cdot a \cdot \cos^{-1}(x)\right]\cdot \sin\left[ks\cdot \cos^{-1}(x)\right]$$

and thus Eq. (8) is demonstrated.

**REFERENCES**

[1] L.M. Pecora and T.L. Carroll, "Synchronization in chaotic systems," Phys. Rev. Lett., 64, 821 (1990).
[2] L. Kocarev, "Chaos-Based Cryptography: a Brief Overview," IEEE Circuits and Systems Magazine, 1, 6 (2001);
[3] L. Kocarev, T. Stojanovski, G. G. Rizzotto, F. Italia, and D. Porto, "Method for generating a random number sequence and a relative random bit generator", European Patent Application No. 01830764.5, filing date: 13 December 2001.
[4] L. Kocarev, G. Jakimoski, G. G. Rizzotto, and P. Amato, "Chaos-based data protection using time-discrete dynamical systems", European Patent Application No. 01130846.57, filing date: 27 December 2001.
[5] L. Kocarev, P. Amato, and G. G. Rizzotto, " Method of generating a chaos-based pseudo-random sequence and a hardware generator of chaos-based pseudo random bit sequences", European Patent Application No. 02425689.3; filing date: 12 November 2002.
[6] A. Menezes, P. van Oorschot, and S. Vanstone, Handbook of Applied Cryptography, CRC Press, 1997.
[7] C. E. Shannon, "Communication theory of secrecy systems", Bell Syst. Techn. J., 28, 656 (1949).
[8] C. E. Shannon, Bell Systems Technical Journal 27, 379 (1948); 27, 623 (1948).
[9] W. Diffle and M. E. Hellman, "New directions in cryptography", IEEE Tran of Information Theory, 22, 644 (1976).
[10] T. J. Rivlin, Chebyshev polynomials, John Wiley and Sons, INC., New York, 1990
[11] www.swox.com/gmp/
[12] G. Julia, "Memoire sur la permutabilité des fractions rationnelles," Ann. Sci. École Norm. Sup., 39, 131 (1922).
[13] T. Kohda and H. Fujisaki, "Jacobian elliptic Chebyshev rational maps", Physica D 148, 242 (2001).
[14] R.L. Devaney, "An Introduction to Chaotic Dynamical Systems", Benjamin/Cummings, New York, 1984.

**Claims**

1. An encryption process comprising the step of choosing preliminarily at least a secret key and at least a chaotic map defined on a certain phase space for encrypting/decrypting messages, choosing a code for encoding messages to be sent in the form of a number *M* belonging to said phase space, **characterized in that** said at least one chaotic map is chosen in a set of permutable functions being composed of chaotic maps $f\left(p\left(f^{-1}(.)\right)\right)$ generated by a composite function of a first function *f(.)*, a second function *p(.)* and the inverse of said first function *f⁻¹(.)*, said secret key being defined by said second function *p(.)*.

2. The encryption process of claim 1, further comprising the definition of a public key for encrypting messages to be sent.

**3.** The public-key encryption process of claim 2, further comprising the step of choosing preliminarily an invertible parametric function $q_{par}(.)$ defined almost everywhere on said phase space; a recipient of a message carrying out the following steps:

choosing an invertible second function $p_r(.)$ as private key so that the corresponding chaotic map $T_r(.)$ belongs to said set of permutable chaotic maps, and
choosing a random number x belonging to said phase space,
calculating the image of said random number x through said recipient chaotic map $T_r(x)$, the pair constituted by said random number and said image thereof x, $T_r(x)$ being the public-key of the recipient;
a sender of a message carrying out the following steps:

encoding the message to be transmitted by said code, generating said number *M*,
choosing an invertible second function $p_s(.)$ as private key so that the corresponding chaotic map $T_s(.)$ belongs to said set of permutable chaotic maps, and
calculating the images of said random number *x* through said sender chaotic map $T_s(x)$ and through the combination of said recipient and sender chaotic maps $T_s(T_r(x))$,

sending to the recipient a pair of values *c*, the first value of said pair being said image through said sender map $T_s(x)$ while the second value *X* of said pair being calculated by applying said parametric function $q_{T_s(T_r(x))}(.)$ to said number *M* using as parameter the image through the combination of said recipient and sender maps $T_s(T_r(x))$;
the recipient decrypting the message by:

calculating the image through said recipient map $T_r(.)$ of the first value of said pair $T_r(T_s(x))$,

obtaining said number M applying the inverse of said parametric function $q^{-1}_{T_r(T_s(x))}(.)$ to the second value *X* of said pair using as parameter the image through said recipient map $T_r(.)$ of the first value of said pair $T_r(T_s(x))$, and
recovering the original message by decoding said number *M* with the preestablished code.

**4.** The public-key encryption process of claim 2, wherein

a recipient of a message chooses a second function $p_R(.)$ as public key, the inverse of which $p_R^{-1}(.)$ being hard

to compute and constituting his private key, so that the corresponding chaotic map $f\left(p_R\left(f^{-1}(.)\right)\right)$ belongs to said set of permutable chaotic maps;
a sender of a message encrypts an encoded message *M* by calculating the image thereof through said chaotic map using the public key of the recipient of the message *M*;

the recipient decrypts an encrypted message by using his private key $p_R^{-1}(.)$.

**5.** The encryption process of claim 1, wherein
a sender of a message carries out the following steps:

choosing an invertible second function ($ps(.)$) as secret key so that the corresponding chaotic map

$f\left(p_S\left(f^{-1}(.)\right)\right)$ belongs to said set of permutable chaotic maps, and

encrypting an encoded message M to be sent by calculating the image thereof through said chaotic map $f\left(p_S\left(f^{-1}(.)\right)\right)$ using his secret key $p_s(.)$;

a recipient carries out the following steps:

choosing an invertible second function $p_R(.)$ as secret key so that the corresponding chaotic map

$$f\!\left(p_R\!\left(f^{-1}(.)\right)\right)$$ belongs to said set of permutable chaotic maps,

encrypting the received encrypted message by calculating the image thereof through said chaotic map

$$f\!\left(p_R\!\left(f^{-1}(.)\right)\right)$$ using his secret key $p_R(.)$, and

sending back to the sender the twice encrypted message;

the sender carrying out the following steps:

decrypting the twice encrypted message sent back from the recipient using his own secret key, and
sending the resulting encrypted message to the recipient;
the recipient obtaining the original message $M$ by decrypting the just received encrypted message using
his own secret key.

6. The encryption process of claim 3, wherein the image of said parametric function $q_{par}(.)$ is the product between the
argument of the function by the parameter thereof.

7. The encryption process of claim 3, wherein the image of said parametric function $q_{par}(.)$ is the ratio between the
argument of the function by the parameter thereof.

8. The encryption process of claim 3, wherein the image of said parametric function $q_{par}(.)$ is the sum between the
argument of the function and the parameter thereof.

9. The encryption process of claim 1, wherein said second function $p(.)$ is a linear function.

10. The encryption process of claim 9, wherein said chaotic maps are Chebyshev polynomial maps $\cos(p \cdot \cos^{-1}(y))$,
the degree $p$ of which is an integer greater than or equal to 2, and said phase space is the interval [-1, 1].

11. The encryption process of claim 1, wherein said chaotic maps are a combination of Chebyshev polynomial maps
and powers, defined by the following formula

$$\cos\!\left[\left(\cos^{-1}(y)+2\right)^{p}-2\right]$$

the parameter p of which is an integer greater than or equal to 2, and said phase space is the interval [-1, 1].

12. The encryption process of claim 1, wherein said maps are defined by the following formula

$$\left[(y+1)^{p}-1\right]\mathrm{mod}\,1$$

the parameter p of which is an integer greater than or equal to 2, and said phase space is the interval [0, 1].

13. The encryption process of claim 10, wherein images of recipient or sender chaotic maps are calculated by:

a) factoring the degree p of a Chebyshev map obtaining a list of its prime factors $s_1, ..., s_n$ and a list of their
corresponding exponents $k_1, ..., k_n$;
b) applying iteratively a Chebyshev map the degree of which is the first value of said list of prime factors $s_1$, for
a number of times equal to the exponent thereof $k_1$;
c) repeating iteratively step b) in which the degrees of the Chebyshev map are the remaining values of said list
of prime factors;
d) the result of the last iteration being said image to be calculated.

**14.** A digital signature process for the public-key encryption process of claim 3, wherein a sender performs the following operations:

generating a public key $x$, $T_a(x)$ according to the process of one of claims from 10 to 12, wherein a first integer number $a$ is the parameter of the chaotic map;
generating a second integer number $k$ and calculating a second image $T_k(x)$ of said random number $x$ through said chaotic map $T_k(.)$ the parameter of which is said second integer number $k$;
generating a verification number $h$;
choosing a first test function $V_1(.)$, a second test function $V_2(.)$ and a third test function H(.) such that

$$V_1\big(T_a(x), T_k(x), H(h, T_k(x), k, a), x\big) \equiv V_2\big(h, T_k(x), H(h, T_k(x), k, a), x\big);$$

generating a second verification number s according to the following formula

$$s = H\big(h, T_k(x), k, a\big);$$

sending the pair $T_k(x)$, $s$ constituted by said second image $T_k(x)$ and said second verification number $s$ as signature of a message $M$;
a recipient performs the following operations:

obtaining the authentic sender public key x, $T_a(x)$;
calculating a first test value $v_1$ using said first test function $V_1(.)$ according to the following formula

$$v_1 = V_1\big(T_a(x), T_k(x), s, x\big);$$

calculating a second test value $v_2$ using said second test function $V_2(.)$ and said verification number $h$ according to the following formula

$$v_2 = V_2\big(h, T_k(x), s, x\big);$$

verifying whether said test values first $v_1$ and second $v_2$ are identical.

**15.** The digital signature process of claim 14, comprising the preliminary step of choosing a hash function $h(.)$ defined on said phase space, wherein said first verification number $h$ is the image of said message $M$ through said hash function $h(.)$.

**16.** The digital signature process of claim 14, comprising the steps of
defining a first $g_1(.)$ and a second $g_2(.)$ auxiliary functions such that

$$g_1\big(h, T_k(x)\big) \cdot k = g_2(s) \cdot a ;$$

said first test value $v_1$ being the image of said random number x through said chaotic map according to the following formula

$$v_1 = T_{g_2(s)}\big(T_a(x)\big) ;$$

said second test value $v_2$ being the image of said random number x through said chaotic map according to the following formula

$$v_2 = T_{g_1(h,T_k(x))}(T_k(x));$$

wherein said chaotic map is as defined in claim 10.

17. The digital signature process of claim 16, wherein said first auxiliary function $g_1(.)$ returns always said verification number $h$, said second auxiliary function $g_2(.)$ is the identity function, and said second verification number $s = (h \cdot k)/a$ being the ratio between the product of said first verification number $h$ by said second integer number $k$, and the private key $a$ of the sender.

18. The digital signature process of claim 14, wherein
said chaotic map is as defined in claim 10;

said second verification number $s$ is the ratio $\dfrac{h - a \cdot T_k(x)}{k}$ between the difference between said first verification number $h$ and the product between said first integer $a$ by said second image $T_k(x)$, and said second integer number $k$;
said second test value $v_2$ being the image of said random number $x$ through said Chebyshev map the order of which is said first verification number $h$;
the recipient carries out the following operations:
calculating an auxiliary value $T_{T_k}(x)(T_a(x)) = T_{T_k}(x)a(x)$ as image of the second component $T_a(x)$ of said recipient public key through the Chebyshev map the order of which is said second image $T_k(x)$;
calculating a second auxiliary value $T_s(T_k(x)) = T_{sk}(x)$ as image of said second image $T_k(x)$ through the Chebyshev map the order of which is said second verification number s;
calculating said first test value $v_1$ as the image $T_{T_k(x)a+ks}(x)$ through the Chebyshev map of said random number x the order of which is the sum of the product between said first integer $a$ by said second image $T_k(x)$ and the product of said second integer k by said second verification number s, by combining said auxiliary values first $T_{T_k(x)a}(x)$ and second $T_{sk}(x)$ according to the following formula

$$v_1 = T_{T_k(x)a+ks}(x) = T_{T_k(x)a}(x) \cdot T_{ks}(x) - \sqrt{\left(1 - T_{T_k(x)a}^2(x)\right) \cdot \left(1 - T_{ks}^2(x)\right)}.$$

19. A digital signature process for the public-key encryption process of claim 4, wherein
a sender carries out the following operations:

encrypting a digital signature by calculating the image thereof through said chaotic map $f\left(p_S^{-1}\left(f^{-1}(.)\right)\right)$ using his own private key $p_S^{-1}(.)$,

encrypting a message M together with the encrypted digital signature appended thereto, by calculating the image of the combination of the message and the encrypted digital signature through said chaotic map $f\left(p_R\left(f^{-1}(.)\right)\right)$ using a recipient public-key $p_R(.)$;
a recipient carries out the following operations:

decrypting the received encrypted message by calculating the image thereof through said chaotic map $f\left(p_R^{-1}\left(f^{-1}(.)\right)\right)$ using his own private key $p_R^{-1}(.)$, and

obtaining the digital signature by decrypting the just decrypted message by calculating the image thereof through said chaotic map $f\!\left(p_{S}\left(f^{-1}(.)\right)\right)$ using the sender public key $p_s(.)$ .

**20.** The digital signature process of claim 19, wherein said digital signature is the message $M$ to be sent.

**21.** A computer program loadable in an internal memory of a computer, comprising a software code for executing the process steps of any of claims from 1 to 20 when said program is run on a computer.

**Patentansprüche**

**1.** Verschlüsselungsverfahren, das den Schritt des vorbereitenden Wählens mindestens eines geheimen Schlüssels und mindestens einer chaotischen Abbildung, die in einem bestimmten Phasenraum definiert ist, zum Verschlüsseln/ Entschlüsseln von Nachrichten aufweist, wobei ein Code zum Codieren von Nachrichten, die gesendet werden sollen, in der Form einer Zahl $M$, die zum Phasenraum gehört, gewählt wird, **dadurch gekennzeichnet, dass** die mindestens eine chaotische Abbildung aus einem Satz vertauschbarer Funktionen gewählt wird, der aus chao-

tischen Abbildungen $f\!\left(p\left(f^{-1}(.)\right)\right)$ zusammengesetzt ist, die durch eine zusammengesetzte Funktion einer ersten Funktion $f(.)$, einer zweiten Funktion $p(.)$ und der Umkehrfunktion der ersten Funktion $f^{-1}(.)$ erzeugt werden, wobei der geheime Schlüssel durch die zweite Funktion $p(.)$ definiert ist.

**2.** Verschlüsselungsverfahren nach Anspruch 1, das ferner die Definition eines öffentlichen Schlüssels zum Verschlüsseln von Nachrichten aufweist, die gesendet werden sollen.

**3.** Verschlüsselungsverfahren mit einem öffentlichen Schlüssel nach Anspruch 2, das ferner den Schritt des vorbereitenden Wählens einer umkehrbaren parametrischen Funktion $p_{par}(.)$ aufweist, die fast überall im Phasenraum definiert ist; wobei ein Empfänger einer Nachricht die folgenden Schritte ausführt:

Wählen einer umkehrbaren zweiten Funktion $p_r(.)$ als privaten Schlüssel, so dass die entsprechende chaotische Abbildung $T_r(.)$ zum Satz der vertauschbaren chaotischen Abbildungen gehört, und
Wählen einer Zufallszahl $x$, die zum Phasenraum gehört,
Berechnen des Bilds der Zufallszahl $x$ durch den Empfänger der chaotischen Abbildung $T_r(x)$, wobei das Paar $x, T_r(x)$, das durch die Zufallszahl und deren Bild gebildet wird, der öffentliche Schlüssel des Empfängers ist;

wobei ein Sender einer Nachricht die folgenden Schritte ausführt:

Codieren der Nachricht, die übertragen werden soll, durch den Code, wobei die Zahl $M$ erzeugt wird,
Wählen einer umkehrbaren zweiten Funktion $p_s(.)$ als privaten Schlüssel, so dass die entsprechende chaotische Abbildung $T_s(.)$ zum Satz der vertauschbaren chaotischen Abbildungen gehört, und
Berechnen der Bilder der Zufallszahl $x$ durch die chaotische Abbildung des Senders $T_s(x)$ und durch die Kombination der chaotischen Abbildungendes Empfängers und des Senders $T_s(T_r(x))$,
Senden eines Paars von Werten $c$ an den Empfänger, wobei der erste Wert des Paars das Bild durch die Abbildung des Senders $T_s(x)$ ist, während der zweite Wert $X$ des Paars berechnet wird, indem die parametrische Funktion $q_{T_s(T_r(x))}(.)$ auf die Zahl $M$ angewendet wird, wobei das Bild durch die Kombination der Abbildungen des Empfängers und des Senders $T_s(T_r(x))$ als Parameter verwendet wird;

wobei der Empfänger die Nachricht entschlüsselt durch:

Berechnen des Bilds durch die Abbildung des Empfängers $T_r(.)$ des ersten Werts des Paars $T_r(T_s(x))$,
Erhalten der Zahl $M$ unter Anwenden der Umkehrfunktion der parametrischen Funktion $q^{-1}{}_{T_r(T_s(x))}(.)$ auf den zweiten Wert $X$ des Paars, wobei das Bild durch die Abbildung des Empfängers $T_r(.)$ des ersten Werts des Paars $T_r(T_s(x))$ als Parameter verwendet wird, und
Zurückgewinnen der ursprünglichen Nachricht durch Decodieren der Zahl $M$ mit dem vorher festgelegten Code.

**4.** Verschlüsselungsverfahren mit einem öffentlichen Schlüssel nach Anspruch 2, wobei
ein Empfänger einer Nachricht eine zweite Funktion $p_R(.)$ als öffentlichen Schlüssel wählt, wobei deren Umkehr-

funktion $p_R^{-1}(.)$ schwer zu berechnen ist und seinen privaten Schlüssel bildet, so dass die entsprechende chaotische Abbildung $f\left(p_R\left(f^{-1}(.)\right)\right)$ zum Satz vertauschbarer chaotischer Abbildungen gehört;

ein Sender einer Nachricht eine codierte Nachricht $M$ durch Berechnen ihres Bilds durch die chaotische Abbildung verschlüsselt, wobei der öffentliche Schlüssel des Empfängers der Nachricht $M$ verwendet wird;

der Empfänger eine verschlüsselte Nachricht durch die Verwendung seines privaten Schlüssels $p_R^{-1}(.)$ entschlüsselt.

5. Verschlüsselungsverfahren nach Anspruch 1, wobei
ein Sender einer Nachricht die folgenden Schritte ausführt:

Wählen einer umkehrbaren zweiten Funktion ($p_S(.)$) als geheimen Schlüssel, so dass die entsprechende chaotische Abbildung $f\left(p_S\left(f^{-1}(.)\right)\right)$ zum Satz der vertauschbaren chaotischen Abbildungen gehört, und

Verschlüsseln einer codierten Nachricht $M$, die gesendet werden soll, durch Berechnen deren Bilds durch die chaotische Abbildung $f\left(p_S\left(f^{-1}(.)\right)\right)$, wobei sein geheimer Schlüssel $p_s(.)$ verwendet wird;

ein Empfänger die folgenden Schritte ausführt:

Wählen einer umkehrbaren zweiten Funktion $p_R(.)$ als geheimen Schlüssel, so dass die entsprechende chaotische Abbildung $f\left(p_R\left(f^{-1}(.)\right)\right)$ zum Satz der vertauschbaren chaotischen Abbildungen gehört,

Verschlüsseln der empfangenen verschlüsselten Nachricht durch Berechnen deren Bilds durch die chaotische Abbildung $f\left(p_R\left(f^{-1}(.)\right)\right)$, wobei sein geheimer Schlüssel $p_R(.)$ verwendet wird, und Zurücksenden der doppelt verschlüsselten Nachricht zum Sender;

der Sender die folgenden Schritte ausführt:

Entschlüsseln der doppelt verschlüsselten vom Empfänger zurückgesendeten Nachricht, wobei sein eigener geheimer Schlüssel verwendet wird, und
Senden der resultierenden verschlüsselten Nachricht an den Empfänger;
wobei der Empfänger die ursprüngliche Nachricht $M$ durch Entschlüsseln der gerade empfangenen verschlüsselten Nachricht erhält, wobei sein eigener geheimer Schlüssel verwendet wird.

6. Verschlüsselungsverfahren nach Anspruch 3, wobei das Bild der parametrischen Funktion $q_{par}(.)$ das Produkt zwischen dem Argument der Funktion und deren Parameter ist.

7. Verschlüsselungsverfahren nach Anspruch 3, wobei das Bild der parametrischen Funktion $q_{par}(.)$ das Verhältnis zwischen dem Argument der Funktion und deren Parameter ist.

8. Verschlüsselungsverfahren nach Anspruch 3, wobei das Bild der parametrischen Funktion $q_{par}(.)$ die Summe zwischen dem Argument der Funktion und deren Parameter ist.

9. Verschlüsselungsverfahren nach Anspruch 1, wobei die zweite Funktion $p(.)$ eine lineare Funktion ist.

10. Verschlüsselungsverfahren nach Anspruch 9, wobei die chaotischen Abbildungen Tschebyscheff-Polynomabbildungen $\cos(p \cdot \cos^{-1}(y))$ sind, deren Grad $p$ eine ganze Zahl ist, die größer oder gleich 2 ist, und der Phasenraum das Intervall [-1, 1] ist.

**11.** Verschlüsselungsverfahren nach Anspruch 1, wobei die chaotischen Abbildungen eine Kombination von Tschebyscheff-Polynomabbildungen und Potenzen sind, die durch die folgende Formel definiert ist

$$\cos\left[\left(\cos^{-1}(y)+2\right)^p - 2\right]$$

deren Parameter $p$ eine ganze Zahl ist, die größer oder gleich 2 ist, und der Phasenraum das Intervall [-1, 1] ist.

**12.** Verschlüsselungsverfahren nach Anspruch 1, wobei die Abbildungen durch die folgende Formel definiert sind

$$\left[(y+1)^p - 1\right]\bmod 1$$

deren Parameter $p$ eine ganze Zahl ist, die größer oder gleich 2 ist, und der Phasenraum das Intervall [-1, 1] ist.

**13.** Verschlüsselungsverfahren nach Anspruch 10, wobei Bilder der chaotischen Abbildungen des Empfängers oder Senders berechnet werden durch:

a) Faktorzerlegung des Grads $p$ einer Tschebyscheff-Abbildung, wobei eine Liste seiner Primfaktoren $s_1,...,s_n$ und eine Liste ihrer entsprechenden Exponenten $k_1,...,k_n$ erhalten wird;
b) iteratives Anwenden einer Tschebyscheff-Abbildung, deren Grad der erste Wert der Liste der Primfaktoren $s_1$ ist, mit einer Häufigkeit, die gleich dessen Exponenten $k_1$ ist;
c) iteratives Wiederholen des Schritts b), in dem die Grade der Tschebyscheff-Abbildung die restlichen Werte der Liste der Primfaktoren sind;
d) wobei das Ergebnis der letzten Iteration das Bild ist, das berechnet werden soll.

**14.** Digitales Signaturverfahren für das Verschlüsselungsverfahren mit einem öffentlichen Schlüssel nach Anspruch 3, wobei
ein Sender die folgenden Operationen durchführt:

Erzeugen eines öffentlichen Schlüssels $x, T_a(x)$ gemäß des Verfahrens nach einem der Ansprüche von 10 bis 12, wobei eine erste ganze Zahl $a$ der Parameter der chaotischen Abbildung ist;
Erzeugen einer zweiten ganzen Zahl $k$ und Berechnen eines zweiten Bilds $T_k(x)$ der Zufallszahl $x$ durch die chaotische Abbildung $T_k(.)$, deren Parameter die zweite ganze Zahl $k$ ist;
Erzeugen einer Prüfzahl $h$ ;
Wählen einer ersten Testfunktion $V_1(.)$, einer zweiten Testfunktion $V_2(.)$ und einer dritten Testfunktion $H(.)$, so dass

$$V_1\left(T_a(x), T_k(x), H\left(h, T_k(x), k, a\right), x\right) \equiv V_2\left(h, T_k(x), H\left(h, T_k(x), k, a\right), x\right) ;$$

Erzeugen einer zweiten Prüfzahl s gemäß der folgenden Formel

$$s = H\left(h, T_k(x), k, a\right) ;$$

Senden des Paars $T_k(x), s$, das durch das zweite Bild $T_k(x)$ und die zweite Prüfzahl s als Signatur einer Nachricht $M$ gebildet wird;

ein Empfänger die folgenden Operationen durchführt:

Erhalten des echten öffentlichen Schlüssels $x, T_a(x)$ des Senders;
Berechnen eines ersten Testwerts $v_1$, wobei die erste Testfunktion $V_1(.)$ verwendet wird, gemäß der folgenden Formel

$$v_1 = V_1\big(T_a(x), T_k(x), s, x\big) ;$$

Berechnen eines zweiten Testwerts $v_2$, wobei die zweite Testfunktion $V_2(.)$ und die Prüfzahl $h$ verwendet wird, gemäß der folgenden Formel

$$v_2 = V_2\big(h, T_k(x), s, x\big) ;$$

Prüfen, ob die ersten Testwerte $v_1$ und die zweiten Testwerte $v_2$ identisch sind.

**15.** Digitales Signaturverfahren nach Anspruch 14, das den vorbereitenden Schritt des Wählens einer Hash-Funktion $h(.)$ aufweist, die im Phasenraum definiert ist, wobei die erste Prüfzahl $h$ das Bild der Nachricht $M$ durch die Hash-Funktion $h(.)$ ist.

**16.** Digitales Signaturverfahren nach Anspruch 14, das die Schritte aufweist:

Definieren einer ersten Hilfsfunktion $g_1(.)$ und einer zweiten Hilfsfunktion $g_2(.)$, so dass

$$g_1\big(h, T_k(x)\big)\cdot k = g_2(s)\cdot a ;$$

wobei der erste Testwert $v_1$ das Bild der Zufallszahl $x$ durch die chaotische Abbildung ist, gemäß der folgenden Formel

$$v_1 = T_{g_2(s)}\big(T_a(x)\big) ;$$

wobei der zweite Testwert $v_2$ das Bild der Zufallszahl x durch die chaotische Abbildung ist, gemäß der folgenden Formel

$$v_2 = T_{g_1(h,T_k(x))}\big(T_k(x)\big) ;$$

wobei die chaotische Abbildung so gestaltet ist, wie im Anspruch 10 definiert.

**17.** Digitales Signaturverfahren nach Anspruch 16, wobei die erste Hilfsfunktion $g_1(.)$ immer die Prüfzahl $h$ zurückgibt, die zweite Hilfsfunktion $g_2(.)$ die Identitätsfunktion ist, und die zweite Prüfzahl $s=(h\cdot k)/a$ das Verhältnis zwischen dem Produkt der ersten Prüfzahl $h$ und der zweiten Ganzzahl $k$, und dem privaten Schlüssel $a$ des Senders ist.

**18.** Digitales Signaturverfahren nach Anspruch 14, wobei
die chaotische Abbildung so gestaltet ist, wie im Anspruch 10 definiert;

die zweite Prüfzahl s das Verhältnis $\dfrac{h - a\cdot T_k(x)}{k}$ zwischen der Differenz zwischen der ersten Prüfzahl $h$ und dem Produkt zwischen der ersten ganzen Zahl $a$ und den zweiten Bild $T_k(x)$, und der zweiten ganzen Zahl $k$ ist;

der zweite Testwert $v_2$ das Bild der Zufallszahl x durch die Tschebyscheff-Abbildung ist, deren Ordnung die erste Prüfzahl $h$ ist;
der Empfänger die folgenden Operationen ausführt:

Berechnen eines Hilfswerts $T_{T_{k(x)}}(T_a(x))=T_{T_{k(x)}\cdot a}(x)$ als Bild der zweiten Komponente $T_a(x)$ des öffentlichen Schlüssels des Empfängers durch die Tschebyscheff-Abbildung, deren Ordnung das zweite Bild $T_k(x)$ ist;
Berechnen eines zweiten Hilfswerts $T_s(T_k(x))=T_{sk}(x)$ als Bild des zweiten Bilds $T_k(x)$ durch die Tschebyscheff-Abbildung, deren Ordnung die zweite Prüfzahl s ist;
Berechnen des ersten Testwerts $v_1$ als das Bild $T_{T_{k(x)a+ks}}(x)$ durch die Tschebyscheff-Abbildung der Zufallszahl x, deren Ordnung die Summe des Produkts zwischen der ersten ganzen Zahl $a$ und dem zweiten Bild $T_k(x)$ und dem Produkt der zweiten ganzen Zahl $k$ und der zweiten Prüfzahl s ist, indem der erste Hilfswert $T_{T_{k(x)}\cdot a}(x)$ und der zweite Hilfswert $T_{sk}(x)$ gemäß der folgenden Formel kombiniert werden

$$v_1 = T_{T_k(x)a+ks}\big(x\big) = T_{T_k(x)a}\big(x\big)\cdot T_{sk}\big(x\big) - \sqrt{\big(1-T^2_{T_k(x)a}\big(x\big)\big)\cdot\big(1-T^2_{ks}\big(x\big)\big)}\;.$$

**19.** Digitales Signaturverfahren für das Verschlüsselungsverfahren mit einem öffentlichen Schlüssel nach Anspruch 4, wobei ein Sender die folgenden Operationen ausführt:

Verschlüsseln einer digitalen Signatur durch Berechnen deren Bilds durch die chaotische Abbildung $f\big(p_S^{-1}\big(f^{-1}(.)\big)\big)$, wobei sein eigener privater Schlüssel $p_S^{-1}(.)$ verwendet wird,

Verschlüsseln einer Nachricht $M$ zusammen mit der daran angehängten verschlüsselten digitalen Signatur durch Berechnen des Bilds der Kombination der Nachricht und der verschlüsselten digitalen Signatur durch die chaotische Abbildung $f\big(p_R\big(f^{-1}(.)\big)\big)$, wobei ein öffentlicher Schlüssel des Empfängers $p_R(.)$ verwendet wird;

ein Empfänger die folgenden Operationen ausführt:

Entschlüsseln der empfangenen verschlüsselten Nachricht durch Berechnen deren Bilds durch die chaotische Abbildung $f\big(p_R^{-1}\big(f^{-1}(.)\big)\big)$, wobei sein eigener privater Schlüssel $p_R^{-1}(.)$ verwendet wird, und

Erhalten der digitalen Signatur durch Entschlüsseln der gerade entschlüsselten Nachricht durch Berechnen deren Bilds durch die chaotische Abbildung $f\big(p_s\big(f^{-1}(.)\big)\big)$, wobei der öffentliche Schlüssel $p_s(.)$ des Senders verwendet wird.

**20.** Digitales Signaturverfahren nach Anspruch 19, wobei die digitale Signatur die Nachricht $M$ ist, die gesendet werden soll.

**21.** Computerprogramm, das in einen internen Speicher eines Computers ladbar ist, das einen Softwarecode zur Ausführung der Verfahrensschritte eines der Ansprüche von 1 bis 20 aufweist, wenn das Programm auf einem Computer ausgeführt wird.

**Revendications**

**1.** Processus de cryptage comprenant l'étape consistant à choisir de façon préliminaire au moins une clé secrète et au moins une carte chaotique définie sur un certain espace de phase pour crypter/décrypter des messages, choisir un code pour coder des messages à envoyer sous la forme d'un nombre M appartenant à l'espace de phase, **caractérisé en ce que** :

ladite au moins une carte chaotique est choisie dans un ensemble de fonctions permutables composé de cartes chaotiques f(p(f⁻¹(.))) produites par une fonction composite d'une première fonction f(.), d'une deuxième fonction p(.) et de l'inverse de la première fonction f⁻¹(.), la clé secrète étant définie par la deuxième fonction p(.).

**2.** Processus de cryptage selon la revendication 1, comprenant en outre la définition d'une clé publique pour crypter des messages à envoyer.

**3.** Processus de cryptage à clé publique selon la revendication 2, comprenant en outre l'étape consistant à choisir préalablement une fonction paramétrique inversible $q_{par}(.)$ définie presque partout sur l'espace de phase ;
le destinataire d'un message mettant en oeuvre les étapes suivantes :

> choisir une deuxième fonction inversible $p_r(.)$ en tant que clé privée de sorte que la carte chaotique correspondante $T_r(.)$ appartient à l'ensemble de cartes chaotiques permutables,
> choisir un nombre aléatoire x appartenant à l'espace de phase, et
> calculer l'image $T_r(x)$ du nombre aléatoire x par l'intermédiaire de la carte chaotique de destinataire, la paire x, $T_r(x)$ constituée du nombre aléatoire et de son image étant la clé publique du destinataire ;

l'émetteur d'un message mettant en oeuvre les étapes suivantes :

> coder le message à transmettre par le code, en produisant le nombre M,
> choisir une deuxième fonction inversible $p_s(.)$ en tant que clé privée de sorte que la carte chaotique correspondante $T_s(.)$ appartient à l'ensemble de cartes chaotiques permutables,
> calculer l'image $T_s(x)$ du nombre aléatoire x par l'intermédiaire de la carte chaotique d'émetteur et l'image $T_s(T_r(x))$ par l'intermédiaire de la combinaison des cartes chaotiques de destinataire et d'émetteur, et
> envoyer au destinataire une paire de valeurs c, la première valeur de la paire étant l'image $T_s(x)$ obtenue par la carte chaotique d'émetteur tandis que la deuxième valeur X de la paire est calculée en appliquant la fonction paramétrique $q_{T_s(T_r(x))}(.)$ au nombre M en utilisant comme paramètre l'image $T_s(T_r(x))$ obtenue par l'intermédiaire de la combinaison des cartes de destinataire et d'émetteur ;

le destinataire décryptant le message par les étapes suivantes :

> calculer l'image $T_r(T_s(x))$ par l'intermédiaire de la carte de destinataire $T_r(.)$ de la première valeur de la paire ;

> obtenir le nombre M en appliquant l'inverse de la fonction paramétrique, $q^{-1}_{T_r(T_s(x))}(.)$, à la seconde valeur X de la paire en utilisant comme paramètre l'image $T_r(T_s(x))$ obtenue par l'intermédiaire de la carte de destinataire $T_r(.)$ de la première valeur de la paire ; et
> récupérer le message d'origine en décodant le nombre M avec le code préétabli.

**4.** Processus de cryptage à clé publique selon la revendication 2, dans lequel :

> le destinataire d'un message choisit une deuxième fonction $p_R(.)$ en tant que clé publique, dont l'inverse $p^{-1}_R(.)$ est difficile à calculer et qui constitue sa clé privée, de sorte que la carte chaotique correspondante $f(p_R(f^{-1}(.)))$ appartient à l'ensemble de cartes chaotiques permutables ;
> l'émetteur d'un message crypte un message codé M en calculant son image par l'intermédiaire de la carte chaotique en utilisant la clé publique du destinataire du message M ;

> le destinataire décrypte un message crypté en utilisant sa clé privée $p^{-1}_R(.)$.

**5.** Processus de cryptage selon la revendication 1, dans lequel :

> l'émetteur d'un message met en oeuvre les étapes suivantes :

>> choisir une deuxième fonction inversible $(p_s(.))$ en tant que clé secrète de sorte que la carte chaotique correspondante $f(p_S(f^{-1}(.)))$ appartient à l'ensemble de cartes chaotiques permutables, et
>> crypter un message codé M à envoyer en calculant son image par l'intermédiaire de la carte chaotique $f(p_S(f^{-1}(.)))$ en utilisant sa clé secrète $p_S(.)$ ;

> le destinataire met en oeuvre les étapes suivantes :

choisir une deuxième fonction inversible $p_R(.)$ en tant que clé secrète de sorte que la carte chaotique correspondante $f(P_R(f^{-1}(.)))$ appartient à l'ensemble de cartes chaotiques permutables,
crypter le message crypté reçu en calculant son image par l'intermédiaire de la carte chaotique $f(p_R(f^{-1}(.)))$ en utilisant sa clé secrète $p_R(.)$, et
renvoyer vers l'émetteur le message doublement crypté ;

l'émetteur mettant en oeuvre les étapes suivantes :

décrypter le message doublement crypté renvoyé par le destinataire en utilisant sa propre clé secrète, et
envoyer le message crypté résultant au destinataire ;

le destinataire obtenant le message d'origine M en décryptant le message crypté qu'il vient de recevoir en utilisant sa propre clé secrète.

6. Processus de cryptage selon la revendication 3, dans lequel l'image de la fonction paramétrique $q_{par}(.)$ est le produit de l'argument de la fonction par son paramètre.

7. Processus de cryptage selon la revendication 3, dans lequel l'image de la fonction paramétrique $q_{par}(.)$ est le rapport entre l'argument de la fonction et son paramètre.

8. Processus de cryptage selon la revendication 3, dans lequel l'image de la fonction paramétrique $q_{par}(.)$ est la somme de l'argument de la fonction et de son paramètre.

9. Processus de cryptage selon la revendication 1, dans lequel la deuxième fonction $p(.)$ est une fonction linéaire.

10. Processus de cryptage selon la revendication 9, dans lequel les cartes chaotiques sont des cartes polynomiales de Chebyshev $\cos(p.\cos^{-1}(y))$, dont le degré $p$ est un entier supérieur ou égal à 2, et l'espace de phase est l'intervalle [-1,1].

11. Processus de cryptage selon la revendication 1, dans lequel les cartes chaotiques sont une combinaison de cartes polynomiales de Chebyshev et de puissances, définie par la formule suivante :

$$\cos\lfloor(\cos^{-1}(y)+2)^{p-2}\rfloor$$

dont le paramètre $p$ est un entier supérieur ou égal à 2, et dont l'espace de phase est l'intervalle [-1,1].

12. Processus de cryptage selon la revendication 1, dans lequel les cartes sont définies par la formule suivante :

$$\lfloor(y+1)^{p-1}\rfloor \bmod 1$$

dont le paramètre $p$ est un entier supérieur ou égal à 2, et dont l'intervalle de phase est [0,1].

13. Processus de cryptage selon la revendication 10, dans lequel des images de cartes chaotiques de destinataire ou d'émetteur sont calculées de la façon suivante :

a) factoriser le degré $p$ d'une carte de Chebyshev en obtenant une liste de ses facteurs premiers $s_1,...,s_n$ et une liste de leurs exposants correspondants $k_1,...,k_n$ ;
b) appliquer itérativement une carte de Chebyshev dont le degré est la première valeur, $s_1$, de la liste de facteurs premiers, un certain nombre de fois égal à son exposant $k_1$ ;
c) réitérer l'étape b) dans laquelle les degrés de la carte de Chebyshev sont les valeurs restantes de la liste de facteurs premiers ;
d) le résultat de la dernière itération étant l'image à calculer.

14. Processus de signature numérique pour le processus de cryptage à clé publique selon la revendication 3, dans lequel :

un émetteur effectue les opérations suivantes :

produire une clé publique x,$T_a$(x) selon le processus d'une quelconque des revendications 10 à 12, un premier nombre entier a étant le paramètre de la carte chaotique ;

produire un deuxième nombre entier k et calculer une deuxième image $T_k$(x) du nombre aléatoire x par l'intermédiaire de la carte chaotique $T_k$(.) dont le paramètre est le deuxième nombre entier k ;

produire un nombre de vérification h ;

choisir une première fonction de test $V_1$(.), une deuxième fonction de test $V_2$(.) et une troisième fonction de test H(.) telles que :

$$V_1(T_a(x),T_k(x),H(h,T_k(x),k,a),x) \equiv V_2(h,T_k(x),H(h,T_k(x),k,a),x) \ ;$$

produire un deuxième nombre de vérification s selon la formule suivante :

$$s = H(h,T_k(x),k,a) \ ;$$

envoyer la paire $T_k$(x),s constituée de la deuxième image $T_k$(x) et du deuxième nombre de vérification s en tant que signature d'un message M ;

un destinataire effectue les opérations suivantes :

obtenir la clé publique d'émetteur authentique x, $T_a$(x) ;

calculer une première valeur de test $v_1$ en utilisant la première fonction de test $V_1$(.) selon la formule suivante :

$$v_1 = V_1(T_a(x),T_k(x),s,x) \ ;$$

calculer une deuxième valeur de test $v_2$ en utilisant la deuxième fonction de test $V_2$(.) et le nombre de vérifications h selon la formule suivante :

$$v_2 = V_2(h,T_k(x),s,x) \ ;$$

vérifier si la première valeur de test $v_1$ et la deuxième valeur de test $v_2$ sont identiques.

**15.** Processus de signature numérique selon la revendication 14, comprenant l'étape préliminaire consistant à choisir une fonction de hachage h(.) définie sur l'espace de phase, le premier nombre de vérification h étant l'image du message M par l'intermédiaire de la fonction de hachage h(.).

**16.** Processus de signature numérique selon la revendication 14, comprenant les étapes consistant à définir une première fonction auxiliaire $g_1$(.) et une deuxième fonction auxiliaire $g_2$(.) telles que :

$$g_1(h,T_k(x)) \cdot k = g_2(s) \cdot a \ ;$$

la première valeur de test $v_1$ étant l'image du nombre aléatoire x par l'intermédiaire de la carte chaotique selon la formule suivante :

$$v_1 = T_{g2(s)}(T_a(x)) \ ;$$

la deuxième valeur de test $v_2$ étant l'image du nombre aléatoire x par l'intermédiaire de la carte chaotique selon la formule suivante :

$$v_2 = T_{g1(h,T_k(x))}(T_k(x)) \; ;$$

la carte chaotique étant définie selon la revendication 10.

**17.** Processus de signature numérique selon la revendication 16, dans lequel la première fonction auxiliaire $g_1(.)$ renvoie toujours le nombre de vérification h, la deuxième fonction auxiliaire $g_2(.)$ est la fonction identité, et le deuxième nombre de vérification s=(h.k)/a est le rapport entre le produit du premier nombre de vérifications h par le deuxième nombre entier k, et la clé privée, a, de l'émetteur.

**18.** Processus de signature numérique selon la revendication 14, dans lequel :

la carte chaotique est telle que cela est défini en revendication 10 ;

le deuxième nombre de vérification s est le rapport $\dfrac{h - a \cdot T_k(x)}{k}$ entre la différence entre le premier nombre de vérification h et le produit du premier entier a par la deuxième image $T_k(x)$, et le deuxième nombre entier k ;

la deuxième valeur de test v2 étant l'image du nombre aléatoire x par l'intermédiaire de la carte de Chebyshev dont l'ordre est le premier nombre de vérification h ;

le destinataire effectue les opérations suivantes :

calculer une valeur auxiliaire $T_{T_{k(x)}}(Ta(x)) = T_{T_{k(x)} \cdot a}(x)$ en tant qu'image de la deuxième composante $T_a(x)$ de la clé publique de destinataire par l'intermédiaire de la carte de Chebyshev dont l'ordre est la deuxième image $T_k(x)$ ;

calculer une deuxième valeur auxiliaire $T_s(T_k(x)) = T_{sk}(x)$ en tant qu'image de la deuxième image $T_k(x)$ par l'intermédiaire de la carte de Chebyshev dont l'ordre est le deuxième nombre de vérification s ;

calculer la première valeur de test $v_1$ en tant qu'image $T_{T_{k(x)a+ks}}(x)$ par l'intermédiaire de la carte de Chebyshev du nombre aléatoire x dont l'ordre est la somme du produit du premier entier a par la deuxième image $T_k(x)$ et du produit du deuxième entier k par le deuxième nombre de vérification s, en combinant les première et deuxième valeurs auxiliaires $T_{T_{k(x)a}}(x)$ et $T_{sk}(x)$ selon la formule suivante :

$$v_1 = T_{T_k(x)a+ks}(x) = T_{T_k(x)a}(x) \cdot T_{ks}(x) - \sqrt{(1 - T^2_{Tk(x)a}(x)) \cdot (1 - T^2_{ks}(x))} \; .$$

**19.** Processus de signature numérique pour le processus de cryptage à clé publique selon la revendication 4, dans lequel :

un émetteur effectue les opérations suivantes :

crypter une signature numérique en calculant son image par l'intermédiaire de la carte chaotique $f(p_S^{-1}(f^{-1}(.)))$ en utilisant sa propre clé privée $p_s^{-1}(.)$,

crypter un message M conjointement avec la signature numérique cryptée qui lui est adjointe, en calculant l'image de la combinaison du message et de la signature numérique cryptée par l'intermédiaire de la carte chaotique $f(p_R(f^{-1}(.)))$ en utilisant une clé publique de destinataire $p_R(.)$ ;

un destinataire effectue les opérations suivantes :

décrypter le message crypté reçu en calculant son image par l'intermédiaire de la carte chaotique $f(p_R^{-1}(f^{-1}(.)))$ en utilisant sa propre clé privée $p_R^{-1}(.)$, et

obtenir la signature numérique en décryptant le message qui vient d'être décrypté en calculant son image par l'intermédiaire de la carte chaotique $f(p_S(f^{-1}(.)))$ en utilisant la clé publique d'émetteur $p_S(.)$.

20. Processus de signature numérique selon la revendication 19, dans lequel la signature numérique est le message M à envoyer.

21. Programme d'ordinateur chargeable dans une mémoire interne d'ordinateur, comprenant des codes de logiciel pour mettre en oeuvre les étapes de procédé selon l'une quelconque des revendications 1 à 20 lorsque le programme est exécuté sur un ordinateur.

**FIG. 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 01830764 A
- EP 0113084657 A

- EP 02425689 A

### Non-patent literature cited in the description

- From chaotic maps to encryption schemes. **L. KOCAREV et al.** ISCAS '98, Proceedings of the 1998 IEEE International Symposium on circuits and systems. IEEE, 31 May 1998, 514-517
- **A. SHAMIR.** On the power of commutativity in cryptography. *Automata Languages and Programming, International Colloquium Proceedings,* 14 July 1980, 582-595
- **L.M. PECORA ; T.L. CARROLL.** Synchronization in chaotic systems. *Phys. Rev. Lett.,* 1990, vol. 64, 821
- **L. KOCAREV.** Chaos-Based Cryptography: a Brief Overview. *IEEE Circuits and Systems Magazine,* 2001, vol. 1, 6
- **A. MENEZES ; P. VAN OORSCHOT ; S. VANSTONE.** Handbook of Applied Cryptography,. CRC Press, 1997

- **C. E. SHANNON.** Communication theory of secrecy systems. *Bell Syst. Techn. J.,* 1949, vol. 28, 656
- **C. E. SHANNON.** *Bell Systems Technical Journal,* 1948, vol. 27, 379, 623
- **W. DIFFLE ; M. E. HELLMAN.** New directions in cryptography. *IEEE Tran of Information Theory,* 1976, vol. 22, 644
- **T. J. RIVIIN.** Chebyshev polynomials,. John Wiley and Sons, INC, 1990
- **G. JULIA.** Memoire sur la permutabilité des fractions rationnelles. *Ann. Sci. École Norm. Sup.,* 1922, vol. 39, 131
- **T. KOHDA ; H. FUJISAKI.** Jacobian elliptic Chebyshev rational maps. *Physica D,* 2001, vol. 148, 242
- **R.L. DEVANEY.** An Introduction to Chaotic Dynamical Systems. *Benjamin/Cummings,* 1984